(19) Europäisches Patentamt
European Patent Office
Office européen des brevets

(11) **EP 1 788 766 A2**

(12) **EUROPEAN PATENT APPLICATION**

(43) Date of publication:
**23.05.2007 Bulletin 2007/21**

(51) Int Cl.:
**H04L 27/18** (2006.01)

(21) Application number: **06250837.9**

(22) Date of filing: **16.02.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventor: **Kawasaki, Toshio,**<br>**Fujitsu Limited**<br>**Kawasaki-shi**<br>**Kanagawa 211-8588 (JP)** |
| (30) Priority: **18.11.2005 JP 2005334793** | (74) Representative: **Hitching, Peter Matthew**<br>**Haseltine Lake**<br>**Lincoln House**<br>**300 High Holborn**<br>**London WC1V 7JH (GB)** |
| (71) Applicant: **Fujitsu Ltd.**<br>**Kawasaki-shi, Kanagawa 211-8588 (JP)** | |

(54) **Communication system, communication method, transmitter and receiver**

(57) A transmitter (1) has a mapping unit (11) mapping transmitting symbol data to a plurality of phase amounts, and a phase rotating process unit (13,14) giving a phase rotation to the transmitting symbol data mapped to the phase amounts to generate a polyphase modulated signal. A receiver (2) has an inter-chip phase difference detecting unit (21,22) detecting a phase difference between a received signal and a signal received one chip unit time before at each chip unit time, an averaging process unit (23,24) averaging phase differences detected at respective chip unit times for one symbol time, and an deciding unit (25) deciding an output from the averaging process unit (23,24) and demodulating the polyphase modulated signal. The symbol error rate can be improved without an error correction circuit.

FIG. 1

**Description**

The present invention relates to a communication system, a communication method, a transmitter and a receiver. Particularly, the present invention relates to a technique suitable for use in a system performing digital communications in phase shift keying (PSK).

In digital communication systems, a symbol error is generated due to noise or the like in the transmission path. As the symbol error rate, the signal to noise ratio is dominant. For this, the symbol error rate can be improved by increasing the transmitting power or decreasing noise. However, the transmitting power is limited, and increasing the transmitting power might interfere with other links. Thus, simply increasing the transmitting power is not preferable, and is not effective to decrease noise. In order to keep the line quality, it has been general to use bit error correction in order to improve the bit error rate.

A technique disclosed in Japanese Patent Application Laid-Open Publication No. HEI02-277332 relates to a scrambling circuit which beforehand randomizes a main signal to be outputted to a digital transmission path in DPSK (Differential PSK). An object of this technique is to improve the degree of randomization of a signal obtained by scrambling the digital main signal before undergoing the differential PSK, whereby the outputted main signal hardly generates a symbol error in the transmission path.

The technique disclosed in Japanese Patent Application Laid-Open Publication No. HEI02-277332 provides a scrambling circuit on the transmitter's side which exclusive-ORs and summing an inputted digital signal with an output from an M-sequence pattern generator generating pseudo-random codes, differential-phase-modulates the signal and outputs it to the transmission path, where the output from the M-sequence pattern generator is differentiated and a result of this is exclusive-ORed to process the input digital signal, whereby the digital signal is scrambled.

Another technique disclosed in Japanese Patent Application Laid-Open Publication No. 2003-264520 relates to a transmitting data generating apparatus used in digital communications, particularly to a transmitting data generating apparatus using differential coding. An object of this technique is to obtain a desired start symbol (which is a signal that is a reference in differential detection, inserted into a frame head) without using a memory circuit.

The technique in Japanese Patent Application Laid-Open Publication No. 2003-264520 includes an adding circuit to which information data is supplied, a one-symbol delay circuit having a delay amount of one symbol period from the information data, and a switching circuit which selects, as a start symbol, output data from the one-symbol delay circuit in one symbol period of the frame head at each frame of the information data, while selecting output data from the adding circuit in a period excepting this one symbol period of the frame to generate transmitting data, and supplies the transmitting data to the one-symbol delay circuit. The adding circuit adds the information data to the output data from the one-symbol delay circuit to form summation data, where the transmitting data is formed by inserting the start data to the summation data at the head portion of the frame.

This technique can provide an arbitrary start symbol without a memory circuit for generating the start symbol, which can prevent an increase in circuit scale and can generate a desired start symbol.

A technique disclosed in PCT Publication No. WO99/5928 Pamphlet relates to a code division multiple access (CDMA) transmission system. An object of this technique is to realize communication with a moving unit moving at high speed such as an automobile, and transmit the same or more quantity of information without increasing the occupied band width, using the same or narrower frequency band width.

According to this technique, on the transmitting side, differential phase modulation (DPSK) is employed to generate a primary modulated wave. On the receiving side, a quasi-synchronous detection and difference operation are utilized to detect the phase difference between the last symbol interval and the current symbol interval, and the detected phase difference is given as information on the current symbol.

Whereby, information is overlapped on a phase difference between the adjacent symbols and transmitted. Even if the received wave is largely distorted due to the frequency selective fading caused by shift of the carrier frequency, phase error and delay error caused by inclusion of a lot of disturbing waves such as reflected and/or diffracted waves in the transmission path, the phase difference between the adjacent symbols can be kept at a value obtained at the time of transmission. By detecting the phase difference between the adjacent symbols, it is possible to attain the above object.

Known digital communication techniques generally employ Viterbi algorithm, Reed-Solomon, BCH (Bose-Chaudhuri Hocquenghem), etc., for symbol error correction, which require a complex error correction circuit. This causes an increase in amount of arithmetic operation, which leads to an increase in power consumption. Incidentally, the techniques in the patent documents identified above are not directed to symbol error correction, but an error correction circuit described above is normally provided in order to improve the symbol error rate.

Accordingly, it is desirable to improve the symbol error rate without an error correction circuit.

Aspects of the present invention can provide a communication system, a communication method, a transmitter and a receiver.

(1) A communication system according to an embodiment of this invention has a transmitter and a receiver. The transmitter comprises a mapping unit for mapping transmitting symbol data to a plurality of phase amounts, a phase rotating process unit for giving a phase rotation to the transmitting symbol data mapped to the phase amounts by the mapping unit at each chip unit time to generate a polyphase modulated signal. The receiver comprises an inter-chip phase difference detecting unit for detecting a phase difference between a received signal received from the transmitter and a received signal received one chip unit time before at each chip unit time, an averaging process unit for averaging phase differences at respective chip unit times detected by the inter-chip phase difference detecting unit for one symbol time, and an deciding unit for deciding an output from the averaging process unit and demodulating the polyphase modulated signal.

(2) In a communication system according to one embodiment of this invention the transmitter comprises a first mapping unit for mapping first transmitting symbol data to a plurality of phase amounts, a second mapping unit for mapping second transmitting symbol data to a plurality of phase amounts, a phase rotating process unit for giving a phase rotation from an initial phase to the first transmitting symbol data mapped to the phase amounts by the first mapping unit at each chip unit time, the initial phase being given by an output from the second mapping unit, to generate a polyphase modulated signal. The receiver comprises a first inter-chip phase difference detecting unit for detecting a phase difference between a received signal received from the transmitter and a received signal received one chip unit time before at each chip unit time, a first averaging process unit for averaging phase differences at respective chip unit times detected by the first inter-chip phase difference detecting unit for one symbol time, a first deciding unit for deciding an output from the first averaging process unit, a frequency signal generating unit for generating a frequency signal according to a result of identification performed by the first deciding unit, a second inter-chip phase difference detecting unit for detecting a phase difference between the frequency signal and the received signal at each chip unit time, a second averaging process unit for averaging phase differences at respective chip unit times detected by the second inter-chip phase difference detecting unit for one symbol time, and a second deciding unit for deciding an output from the second averaging process unit.

(3) A communication method according to an embodiment of this invention comprises the steps of, in a transmitter, mapping transmitting symbol data to a plurality of phase amounts, giving a phase rotation to the mapped transmitting symbol data at each chip unit time to generate a polyphase modulated signal, and transmitting the same; and, in a receiver, detecting a phase difference between a received signal received from the transmitter and a received signal received one chip unit time before at each chip unit time, averaging phase differences detected at respective chip unit times for one symbol time, and deciding an averaged output and demodulating the polyphase modulated signal.

(4) A communication method according to one embodiment of this invention comprises the steps of, in said receiver, mapping each of first and second transmitting symbol data to a plurality of phase amounts, giving a phase rotation from an initial phase to the mapped first transmitting symbol data at each chip unit time, the initial phase being given by the mapped second symbol data, to generate a polyphase modulated signal, and transmitting the same; and, in the receiver, detecting a phase difference between a received signal received from the transmitter and a received signal received one chip unit time before at each chip unit time, averaging phase differences detected at respective chip unit times for one symbol time, deciding an averaged output, generating a frequency signal according to a result of the identification, detecting a phase difference between the frequency signal and the received signal at each chip unit time, averaging phase differences detected at respective chip unit times for one symbol time, and deciding an averaged output.

(5) A transmitter according to an embodiment of this invention is suitable for use in a communication system having a receiver. The transmitter comprises a mapping unit for mapping transmitting symbol data to a plurality of phase amounts, and a phase rotating process unit for giving a phase rotation to the transmitting symbol data mapped to the phase amounts by the mapping unit to generate a polyphase modulated signal.

(6) A receiver according to an embodiment of this invention is suitable for use in a communication system having a transmitter. The receiver comprises an inter-chip phase difference detecting unit for detecting a phase difference between a received signal received from the transmitter and a received signal received one chip unit time before at each chip unit time, an averaging process unit for averaging phase differences at respective chip unit times detected by the inter-chip phase difference detecting unit for one symbol time, and an deciding unit for deciding an output from the averaging process unit and demodulating a multi-value phase modulated signal.

(7) The above receiver may further comprise a symbol-end phase difference detecting unit for detecting a phase difference between the first received signal and the last received signal within one symbol, and an adder for adding the phase difference detected by the symbol-end phase difference detecting unit to a phase difference averaged by the averaging process unit.

(8) A transmitter according to another embodiment of this invention is suitable for use in a communication system having a receiver. The transmitter comprises a first mapping unit for mapping first transmitting symbol data to a plurality of phase amounts, a second mapping unit for mapping second transmitting symbol data to a plurality of phase amounts, and a phase rotating process unit for giving a phase rotation from an initial phase to the first transmitting symbol data mapped to the phase amounts by the first mapping unit at each chip unit time, the initial phase being given by an output from said second mapping unit, to generate a polyphase modulated signal.

(9) A receiver according to another embodiment of this invention is suitable for use in a communication system having a transmitter. The receiver comprises a first inter-chip phase difference detecting unit for detecting a phase difference between a received signal received from the transmitter and a received signal received one chip unit time before at each chip unit time, a first averaging process unit for averaging phase differences at respective chip unit times detected by the first inter-chip phase difference detecting unit for one symbol time, a first deciding unit for deciding an output from the first averaging process unit, a frequency signal generating unit for generating a frequency signal according to a result of identification performed by the first deciding unit, a second inter-chip phase difference detecting unit for detecting a phase difference between the frequency signal and the received signal at each chip unit time, a second averaging process unit for averaging phase differences at respective chip unit times detected by the second inter-chip phase difference detecting unit for one symbol time, and a second deciding unit for deciding an output from the second averaging process unit.

(10) The above receiver may further comprise a symbol-end phase difference detecting unit for detecting a phase difference between the first received signal and the last received signal within one symbol, and an adder for adding a phase difference detected by the symbol-end phase difference detecting unit to a phase difference averaged by the first averaging process unit.

According to embodiments of this invention, it is possible to narrow down the distribution of signal points in the phase direction caused by noise in the receiver. Therefore, the symbol error rate can be improved without a complex error correction circuit.

Reference will now be made, by way of example, to the accompanying drawings, in which:

FIG. 1 is a block diagram showing a structure of a digital communication system according to a first embodiment of this invention;

FIG. 2 is a diagram showing an example of transmitting signal phases in a transmitter in FIG. 1;

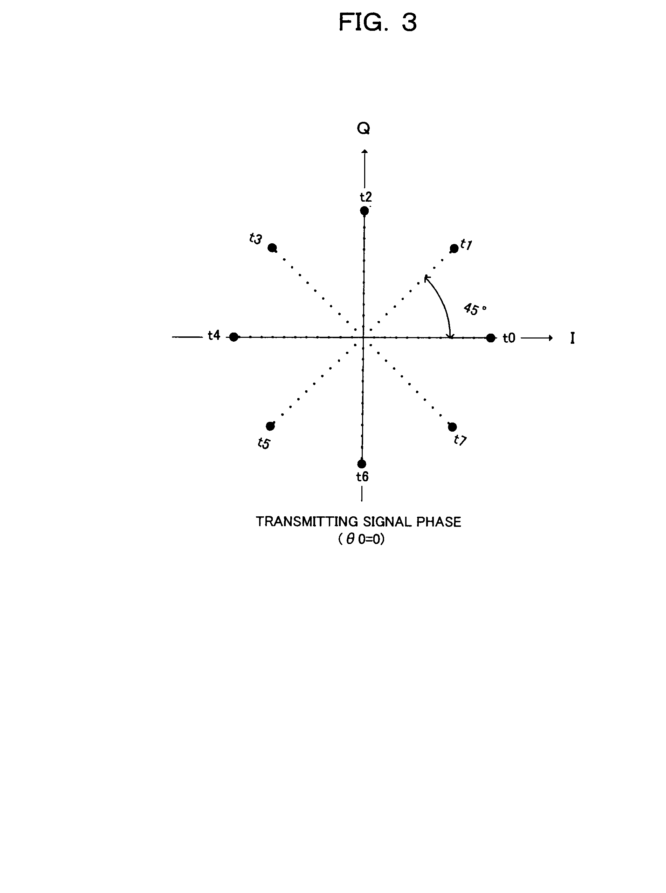

FIG. 3 is a diagram showing an arrangement of signal points in the transmission signal phases in FIG. 2;

FIG. 4 is a diagram showing an example of received signal phases and differential signal phases in a receiver in FIG. 1;

FIG. 5 is a diagram showing an equivalent circuit of a phase difference detecting unit and an averaging process unit in the receiver in FIG. 1;

FIG. 6 is a diagram showing an example of received signal phases (signal point arrangement) in the receiver in FIG. 1;

FIG. 7 is a diagram showing an example of differential signal phases (signal point arrangement) in the receiver in FIG. 1;

FIG. 8 is a diagram showing an example of signal point distribution in the receiver in FIG. 1;

FIG. 9 is a block diagram showing a structure of a receiver which is a structural element of a digital communication system according to a second embodiment of this invention;

FIG. 10 is a diagram showing an example of received signal phases and differential signal phases in the receiver in FIG. 9;

FIG. 11 is a diagram showing an equivalent circuit of a phase difference detecting unit and an averaging process unit in the receiver in FIG. 9;

FIG. 12 is a diagram showing an example of received signal phases (signal point arrangement) in the receiver in FIG. 9;

FIG. 13 is a diagram showing an example of differential signal phases in the receiver in FIG. 9;

FIG. 14 is a diagram showing an example of signal point distribution in the receiver in FIG. 9;

FIG. 15 is a block diagram showing a structure of a transmitter which is a structural element of a digital communication system according to a third embodiment of this invention;

FIG. 16 is a block diagram showing a structure of a digital communication system according to a fourth embodiment of this invention;

FIG. 17 is a diagram showing an example of received signal phases, differential signal phases and absolute phases in a receiver in FIG. 16;

FIG. 18 is a diagram showing signal point arrangement in the received signal phases in FIG. 17;

FIG. 19 is a diagram showing signal point arrangement in the differential signal phases in FIG. 17;

FIG. 20 is a diagram showing signal point arrangement in the absolute phases in FIG. 17;

FIG. 21 is a block diagram showing an example of structure of a synchronizing unit in the receiver in FIGS. 1, 9 and 16;

FIG. 22 is a block diagram showing a structure of a digital communication system according to a fifth embodiment of this invention;

FIG. 23 is a diagram showing an example of frame structure used in the digital communication system in FIG. 22; and

FIG. 24 is a diagram where a result of simulation of a receiving characteristic [S/N (carrier to noise ratio) to bit error rate (BER)] in the case of 16PSK (one symbol 16 chips) according to this invention is compared with a receiving characteristic according to known technique.

[A] Description of First Embodiment

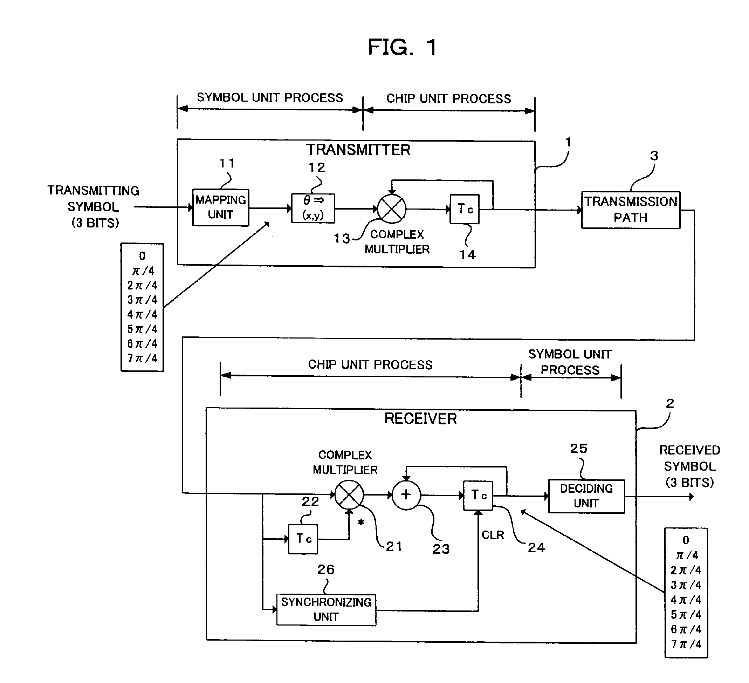

FIG. 1 is a block diagram showing a structure of a digital communication system according to a first embodiment of this invention. The system 1 shown in FIG. 1 has a transmitter 1, and a receiver 2 receiving a signal transmitted through a wire or radio transmission path 3 from the transmitter 1. The transmitter 1 comprises a mapping unit 11, an orthogonal coordinates converting unit 12, a complex multiplier 13 and a one-chip delay circuit (Tc) 14, when attention is given to its essential parts. The receiver 2 comprises a complex multiplier 21, a one-chip delay circuit 22, an adder 23, a one-chip delay circuit 24, an deciding unit 25 and a synchronizing unit 26, when attention is given to its essential parts, as well.

In the transmitter 1, the mapping unit 11 assigns (maps) transmitting symbol data to phases. When the transmitting symbol data is N (=3) bits, for example, the mapping unit 11 converts eight ($2^N=2^3=8$) kinds of information bits to Gray code, and assigns them to eight ($0, \pi/4, 2\pi/4, 3\pi/4, 4\pi/4, 5\pi/4, 6\pi/4$ and $7\pi/4$) phases, respectively.

The orthogonal coordinates converting unit 12 converts a phase amount of each symbol of the transmitting symbol data mapped to the phases to orthogonal coordinates [x, y (I, Q) coordinates: the same shall apply hereinafter]. The complex multiplier 13 performs complex multiplication using transmitting symbol data and a result of complex multiplication obtained one-chip unit time before (an output from the one-chip delay circuit 14) to give a phase rotation to the transmitting symbol data at each chip time, thereby generating a multi-valued (eight in the example in FIG. 1) PSK signal. Namely, a block comprised of the orthogonal coordinates converting unit 12, the complex multiplexer 13 and the one-chip delay circuit 14 functions as a phase rotating process unit which performs a phase rotating process giving a phase rotation to the transmitting symbol data mapped to the phase amounts at each chip unit time to generate a multi-valued PSK signal.

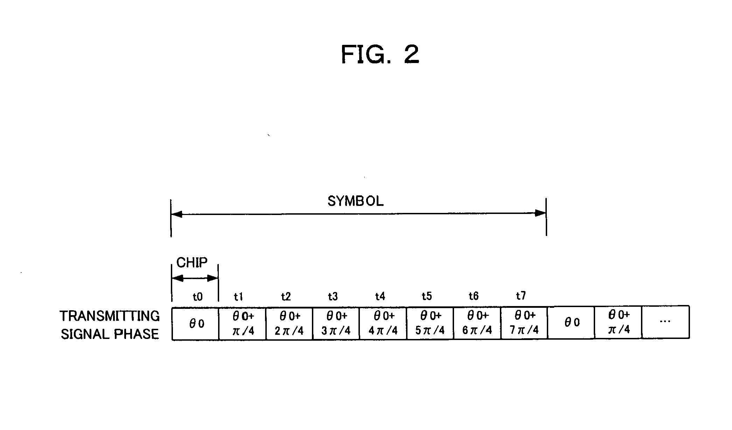

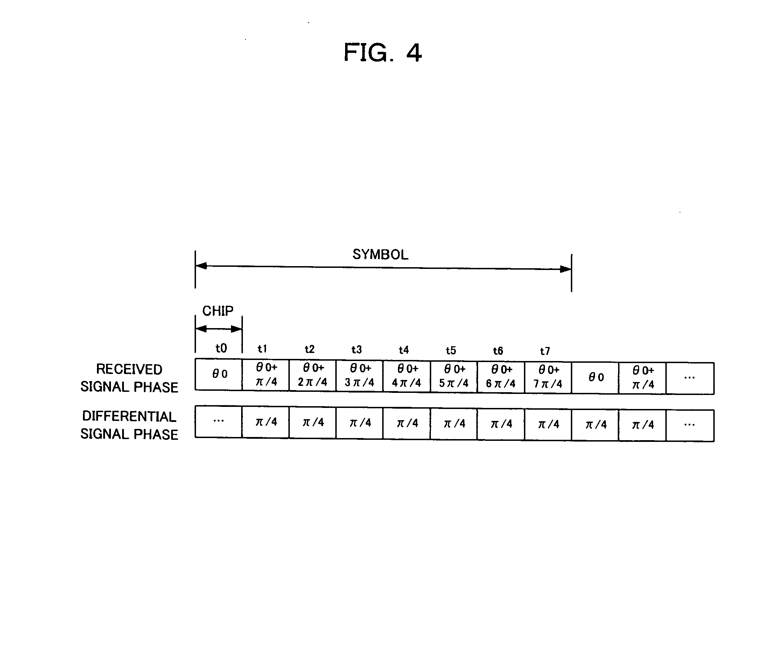

The chip unit time is 1/8 or 1/(8*n) of the symbol time when the signal is an 8PSK signal. In concrete, when the initial phase at the time of mapping t0 is $\theta_0=0$ as shown in FIG. 2, a multi-valued (8) PSK signal is generated, whose phase is rotated $\pi/4$ by $\pi/4$ from the initial phase $\theta_0$ at each chip time (time t1, t2, ..., and t7), as shown in FIG. 4. Not shown in FIG. 1, each orthogonal component (I, Q) of the multi-valued PSK signal is modulated on the carrier wave by a modulator, and transmitted as an orthogonal modulated wave.

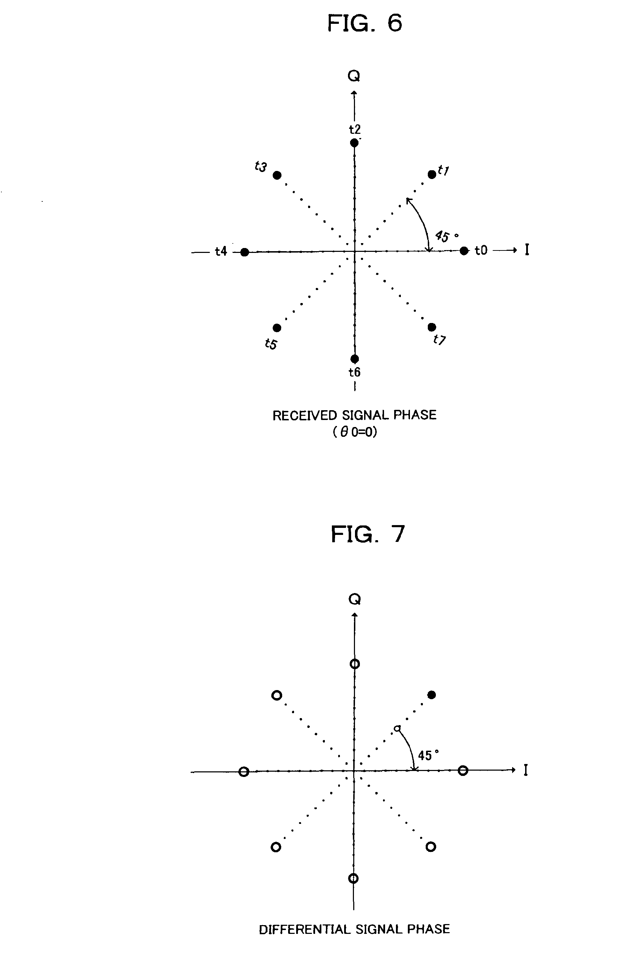

In the receiver 2, the complex multiplier 21 functions together with the one-chip delay circuit 22 as an inter-chip phase difference detecting unit which performs complex multiplication using a received signal from the transmission path 3 and a signal obtained one-chip unit time before by the one-chip delay circuit 22 to detect a phase difference (differential signal phase) between the received signal and the signal obtained one-chip unit time before. When the 8 PSK signal described with reference to FIG. 2 is affected by noise in the transmission path 3 and received with received signal phases shown in FIG. 6, for example, the differential signal phase at each one-chip time within one symbol time is $\pi/4$, as shown in FIGS. 4 and 7.

The adder 23 cumulatively adds outputs from the complex multiplier 21 and feedback outputs from the one-chip delay circuit 24 for one symbol time to average the phase differences at respective chip unit times for one symbol time.

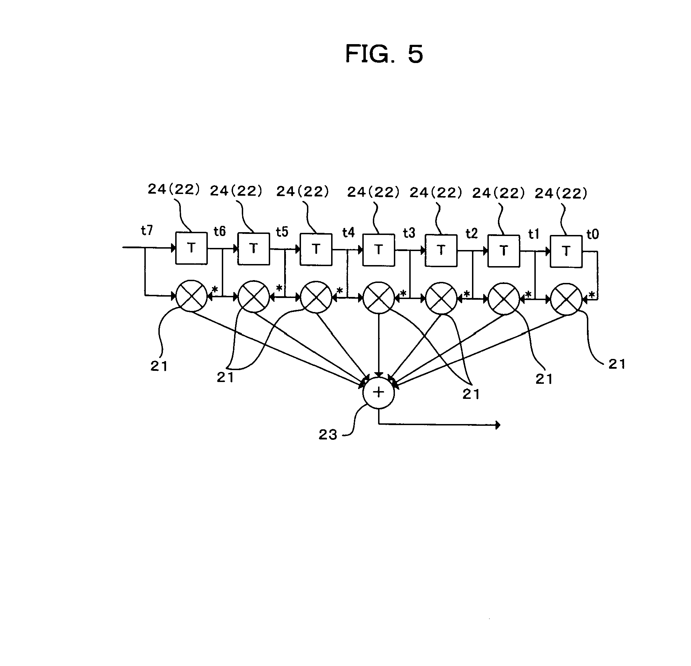

Namely, the adder 23 and the one-chip delay circuit 24 function together as an averaging process unit. A block comprised of the complex multiplier 21, the one-chip delay circuits 22 and 24, and the adder 23 can be represented by an equivalent circuit shown in FIG. 5, where the phase difference at each chip unit time (t0, ..., t7) is determined by the complex multiplier 21 and the one-chip delay circuit 22, and obtained phase differences are cumulatively added by the adder 23 and averaged for one symbol time.

In FIG. 1, the deciding unit 25 identifies the symbol data of the received signal averaged as above, and performs a demodulating process. The synchronizing unit 26 detects a symbol timing from the received signal, and generates an initializing (data clear) timing for the averaging process unit (one-chip delay circuit 24) .

Hereinafter, description will be made of an operation of the digital communication system of this embodiment structured as above when 8PSK is employed.

In the transmitter 1, three-bit transmitting symbol data is converted into Gray code and assigned to eight phases ($0, \pi/4, 2\pi/4, 3\pi/4, 4\pi/4, 5\pi/4, 6\pi/4$ and $7\pi/4$) by the mapping unit 11, and the phase amount of each symbol of the transmitting symbol data is converted to orthogonal coordinates by the orthogonal coordinates converting unit 12. Outputs at respective chip unit times from the orthogonal coordinates converting unit 12 are cumulatively complex-multiplied by the complex multiplier 13 and the one-chip delay circuit 14, whereby an 8PSK signal whose phase is rotated $\pi/4$ by $\pi/4$ at each chip unit time (time t1, t2, ..., t7) from the initial phase $\theta_0$ is generated.

The 8PSK signal is received by the receiver 2 as a signal to which noise has been added in the course of transmission through the transmission path 3. In the receiver 2, the complex multiplier 21 and the one-chip delay circuit 22 compare the phase of the received signal with the phase of a received signal received one chip unit time before, the adder 23 and the one-chip delay circuit 24 perform the averaging process for one symbol time, and the deciding unit 25 identifies the symbol data. The averaging process unit (one-chip delay circuit 24) is initialized at each symbol time detected by the synchronizing unit 26.

In the receiver 2, the phase comparing (complex multiplication) process is performed to compare each phase

5

with a phase obtained one chip unit time before, and results of the process are added (averaged), whereby noise in the received signal is non-correlative anymore, thus the noise in the phase direction is cancelled. The distribution of signal points subjected to noise is generally in a shape of circle or a shape similar to circle. However, correlation of noise allows the noise in the phase direction to be cancelled, thus the distribution of the signal points spreads in the amplitude direction and is in a shape of ellipse whose width in the phase direction is narrowed down.

In the phase modulation system, the identification of signal points is performed on the basis of only phase information. For this, the distribution in the amplitude direction does not affect to degradation of the bit error rate, and the noise in the phase direction is decreased as a result, which leads to improvement of the symbol error rate. This will be described with following equations, where the phase of the received signal is 0.

Assuming that a received signal $S_n$ at time t=n is $S_n=u+x_n+jy_n$. In this case, a phase difference between received signals at time t=n and time t=n+1 is given by the following equation (1):

$$S_{n+1} \times S_n{}^* = (u + x_n + jy_n)(u + x_{n+1} - jy_{n+1})$$

$$= (u + x_n)(u + x_{n+1}) + y_n y_{n+1} + j(uy_n + y_n x_{n+1} - uy_{n+1} - y_{n+1} x_n)$$

$$= u^2 + u(x_n + x_{n+1}) + x_n x_{n+1} + y_n y_{n+1} + j[u(y_n - y_{n+1}) + y_n x_{n+1} - y_{n+1} x_n] \quad \ldots \quad (1)$$

This equation (1) can be approximated to the following equation (2) when SNR is great:

$$S_{n+1} \times S_n{}^* = u^2 + u(x_n + x_{n+1}) + ju(y_n - y_{n+1}) \quad \ldots \quad (2)$$

When the amplitude u is 1 in the equation (2), the equation (2) becomes the following equation (3):

$$S_{n+1} \times S_n{}^* = 1 + (x_n + x_{n+1}) + j(y_n - y_{n+1}) \quad \ldots \quad (3)$$

Accordingly, an average of the symbol is given by the following equation (4):

$$\frac{1}{7}\sum_{0}^{6}\left(s_{n+1} \times s_n^*\right) = 1 + \frac{1}{7}\sum_{0}^{6}\left(x_n + x_{n+1}\right) + j\frac{1}{7}\sum_{0}^{6}\left(y_n - y_{n+1}\right)$$

$$= 1 + \frac{1}{7}\left(x_0 + 2\sum_{1}^{5}\left(x_n + x_{n+1}\right) + x_7\right) + j\frac{1}{7}\left(y_0 - y_7\right) \quad \ldots \quad (4)$$

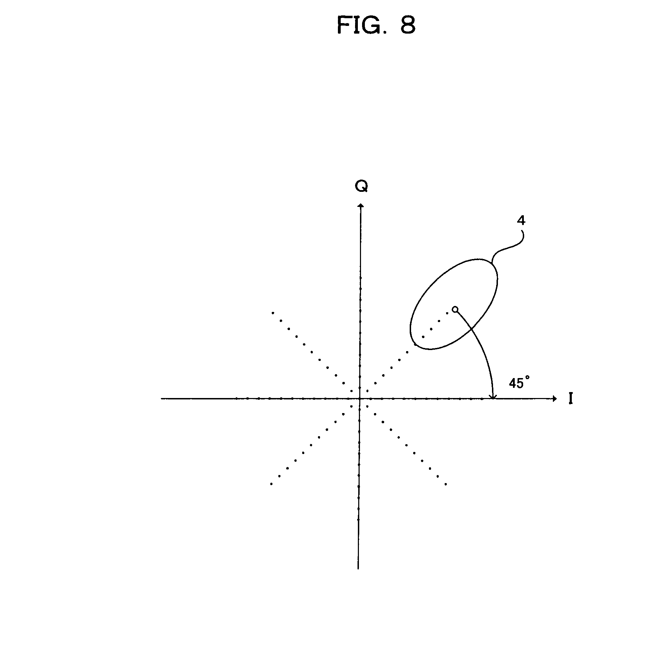

In the equation (4), real number terms (the first and second terms) represent noise components in the amplitude direction, and an imaginary number term (the third term) represents noise components in the phase direction. From the equation (4), it is found that the noise in the amplitude direction is increased while the noise in the phase direction is decreased, thus the distribution of the signal points is elliptic as shown in FIG. 8. Accordingly, the noise in the phase direction is improved, which leads to improvement of the symbol error rate.

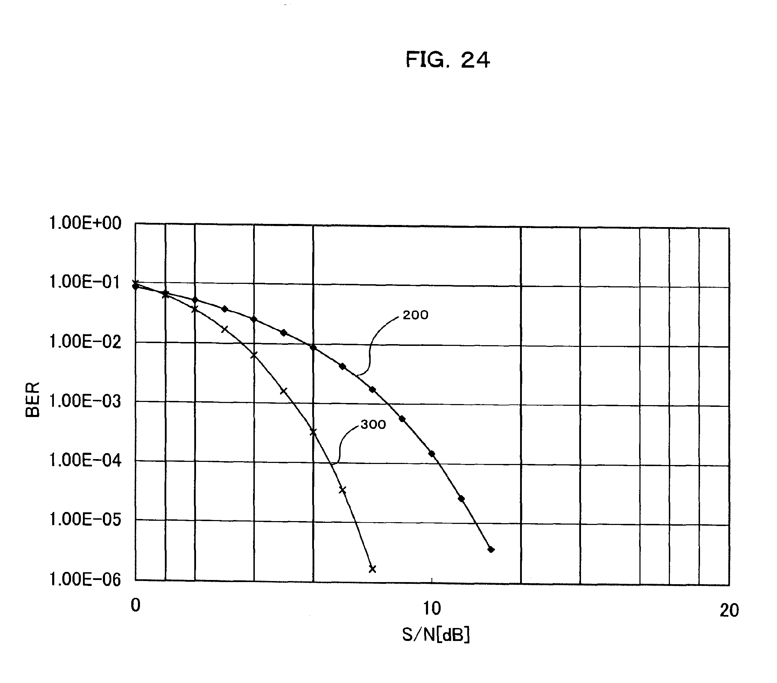

FIG. 24 shows an example of result of simulation of the receiving characteristic [S/N (signal-to-noise ratio) to bit error rate (BER)] in the case of 16PSK (one symbol 16 chips). In FIG. 24, a characteristic denoted by a reference numeral 200 is a receiving characteristic provided by the known technique, while a characteristic denoted by a reference numeral 300 is a receiving characteristic provided by this embodiment. It is clearly seen that the characteristic provided by this embodiment is improved as compared with the characteristic provided by the known technique.

[B] Description of Second Embodiment

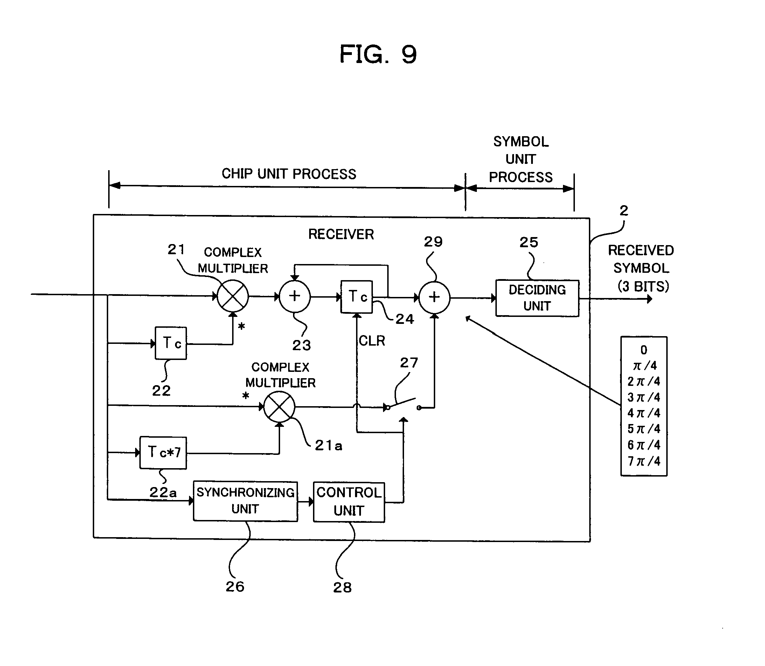

FIG. 9 is a block diagram showing a receiver which is a structural element of a digital communication system according to a second embodiment of this invention. The receiver 2 shown in FIG. 2 differs from the receiver 2 described above with reference to FIG. 1 in that a complex multiplier 21a, a plural-chip delay circuit 22a, a switch 27, a control unit 28 and an adder 29 are added. Other structural elements, that is, structural elements denoted by like reference characters, in FIG. 9 have like functions of the structural elements in FIG. 1. The transmitter 1 and the transmission paths 3 are identical or similar to those described above with reference to FIG. 1.

The plural-chip delay circuit 22a delays a signal received through the transmission path 3 by a plural-chip time (seven chips unit time in the case of 8PSK). The complex multiplier 21a performs complex multiplication using an output from the plural-chip delay circuit 22a and the received signal from the transmission path 3 to detect a received signal phase difference between the two signals, that is, a received signal phase difference between the first chip (time t0) and the last chip (time t7) of the received symbol. Namely, the complex multiplier 21a and the plural-chips delay circuit 22a function together as a symbol-end phase difference detecting unit which detects a phase difference between the first received signal and the last received signal within one symbol.

The switch 27 is turned ON/OFF according to a switching timing from the control unit 28 to supply or shut off the output from the complex multiplier 21a to the adder 29. The control unit 28 supplies the switching timing or a data clear signal for the one-chip delay circuit 24 according to a symbol timing detected by the synchronizing unit 26. Namely, the data in the one-chip-delay circuit 24 is cleared every symbol time (initialization of the averaging process) like the first embodiment, and the switch 27 is controlled to be turned ON at each symbol time to supply the output from the complex multiplier 21a to the adder 29.

The adder 29 adds a result of the averaging process performed by the adder 23 and the one-chip delay circuit 24, that is, an average value of the difference signal phases at respective one-chip unit times for one symbol time, and an output from the complex multiplier 21a supplied when the switch 27 is in the ON state, that is, a received signal phase difference between the first (time t0) chip and the last (time t7) chip of the received symbol, and outputs a result of the addition to the deciding unit 25.

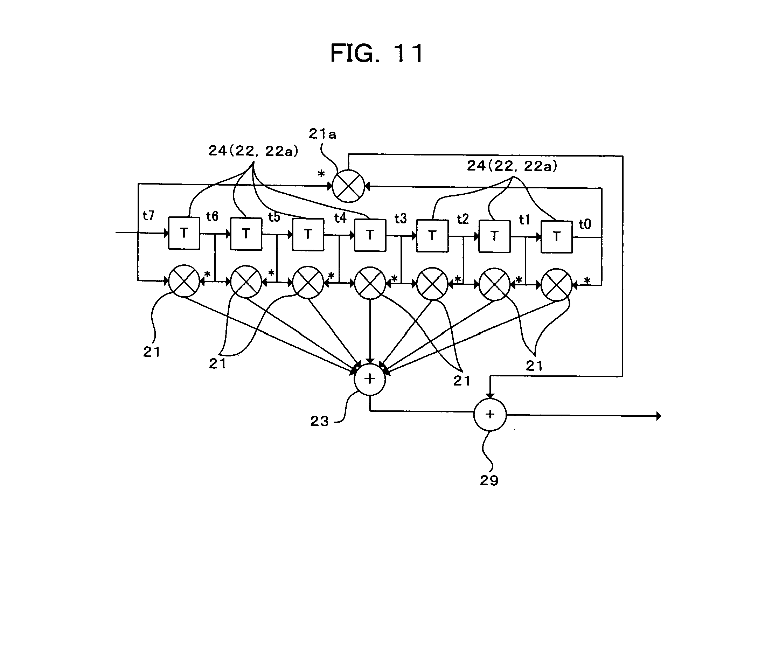

A block comprised of the complex multiplier 21, the one-chip delay circuit 22, the adder 23, the one-chip delay circuit 24, the complex multiplier 21a, the plural-chip delay circuit 22a, the switch 27 and the adder 29 can be represented by an equivalent circuit shown in FIG. 11, where an average value of the differential signal phases obtained in the similar manner to that according to the first embodiment is added to a received signal phase difference between the first chip (time t 0) and the last chip (time t7) of the received symbol.

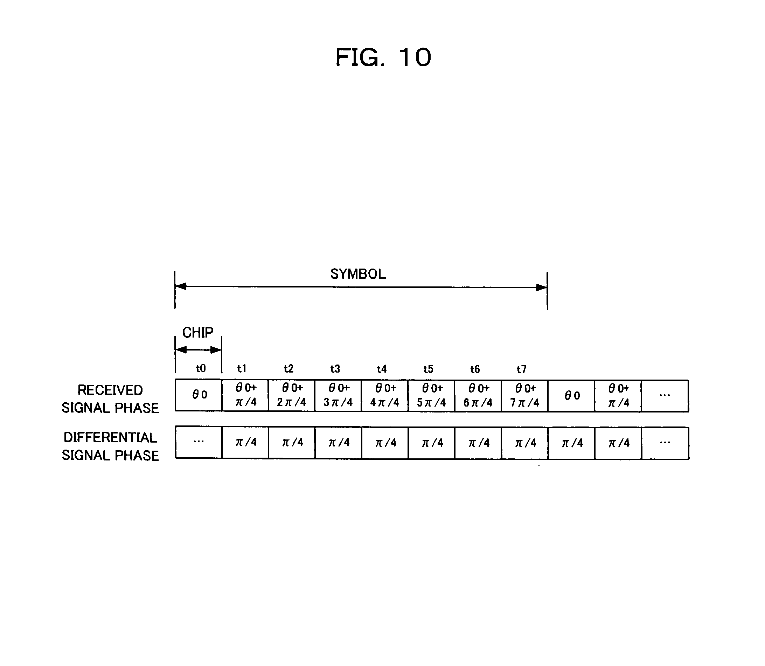

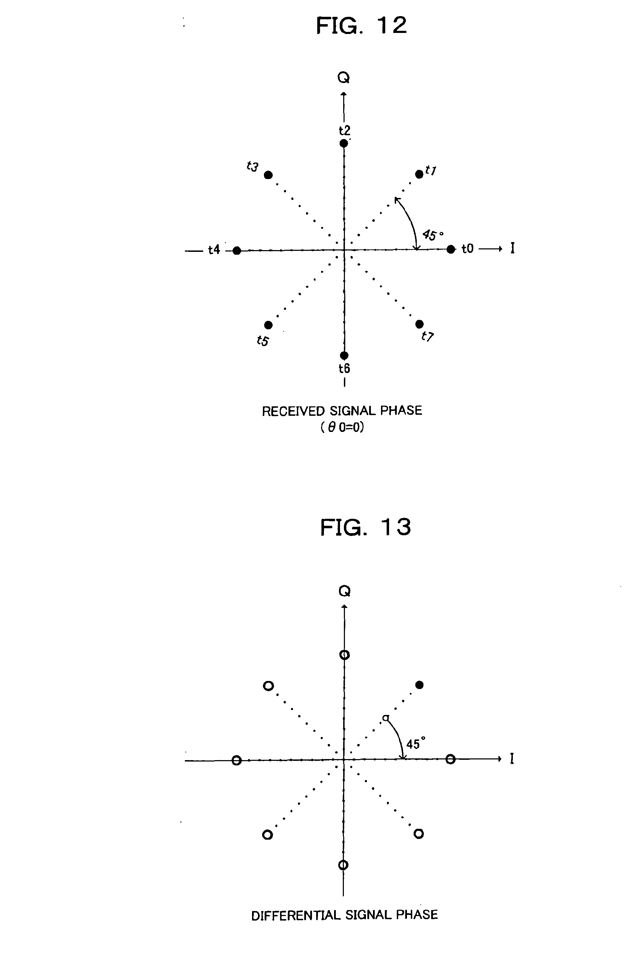

As above, the bit error rate can be more improved. When an 8PSK signal (refer to FIG. 2) generated in and transmitted from the transmitter 4 is subjected to noise and received from the transmission path 3 with received signal phases shown in FIG. 12, for example, the differential signal phase at each one-chip unit time within one symbol time is $\pi/4$ as shown in FIGS. 10 and 13, and the phase difference between the first chip and the last chip is the same phase difference ($\pi/4$) as that at each chip unit time, like the forgoing example. This embodiment uses this periodicity.

In this case, an approximate expression of an average of the symbol is represented by the following equation (5):

$$\frac{1}{8}\left(\sum_{0}^{6}\left(s_{n+1} \times s_{n}^{*}\right) + \left(s_{0} + s_{7}^{*}\right)\right) = 1 + \frac{2}{8}\sum_{0}^{7} x_{n} \dots\dots(5)$$

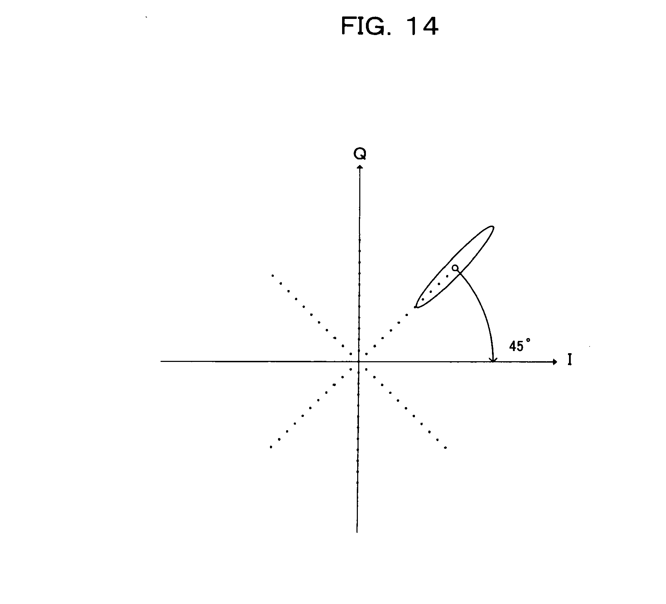

Theoretically, the imaginary number term (noise components in the phase direction) is cancelled. For this, the noise in the phase direction is further improved, which leads to further improvement of the bit error rate. FIG. 14 shows an example of the distribution of signal points according to this embodiment. As shown in FIG. 14, the noise in the phase direction is more suppressed and improved as compared with the first embodiment (refer to FIG. 8).

[C] Description of Third Embodiment

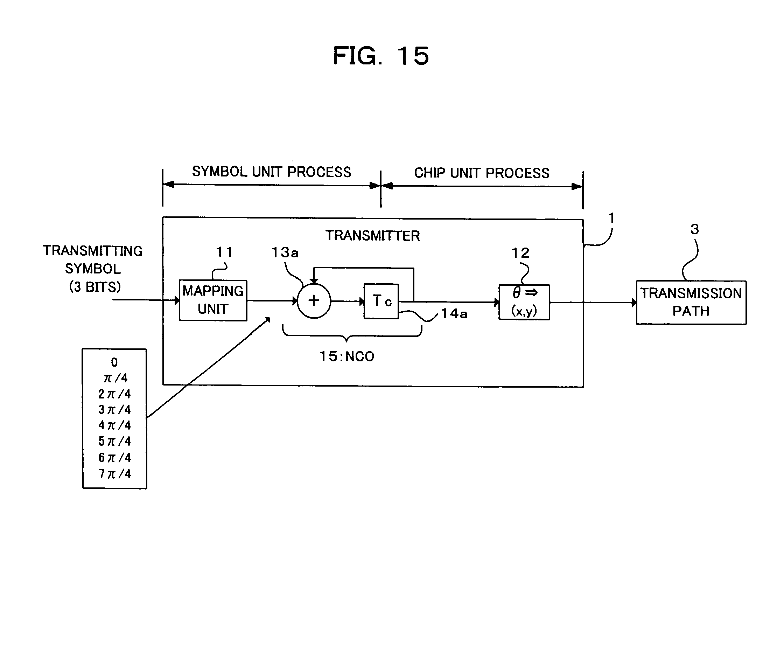

In the transmitter 1 according to the first and second embodiments, a numerically controlled oscillator (NCO) 15 comprised of an adder 13a and a one-chip delay circuit 14a may be disposed between the mapping unit 11 and the orthogonal coordinates converting unit 12 described above in place of the complex multiplier 13 and the one-chip delay circuit 14 described above with reference to FIG. 1, as shown in FIG. 15, for example.

The adder 13a cumulatively adds transmitting symbol data mapped to a plurality of phases by the mapping unit 11 to data obtained one chip unit time before (feedback output from the one-chip delay circuit 14a). The one-chip delay circuit 14a delays a result of the addition by the adder 13a by one chip unit time. The output from the one-chip delay circuit 14a is fed back to the adder 13a in the front stage, and is also outputted to the orthogonal coordinates converting unit 12.

With respect to the transmitting symbol data mapped to a plurality of phases (0, $\pi/4$, $2\pi/4$, $3\pi/4$, $4\pi/4$, $5\pi/4$, $6\pi/4$ and $7\pi/4$) by the mapping unit 11, the adder cumulatively adds the transmitting symbol data to data obtained one chip unit time before to perform the phase rotating process in a similar manner to that according to the first embodiment. Thereafter, the orthogonal coordinates converting unit 12 converts the data to orthogonal coordinates to generate a multi-valued PSK signal. In this embodiment, the phase rotating process is performed on the transmitting symbol data by the NCO 15 before the data is converted to orthogonal coordinates by the orthogonal coordinates converting unit 12.

In the above manner, a multi-valued PSK signal can be generated like the first embodiment. This embodiment can simplify the structure of the transmitter 1 as compared with the transmitter 1 according to the first embodiment because the adder 13a can be used in place of the complex multiplier 13.

[D] Description of Fourth Embodiment

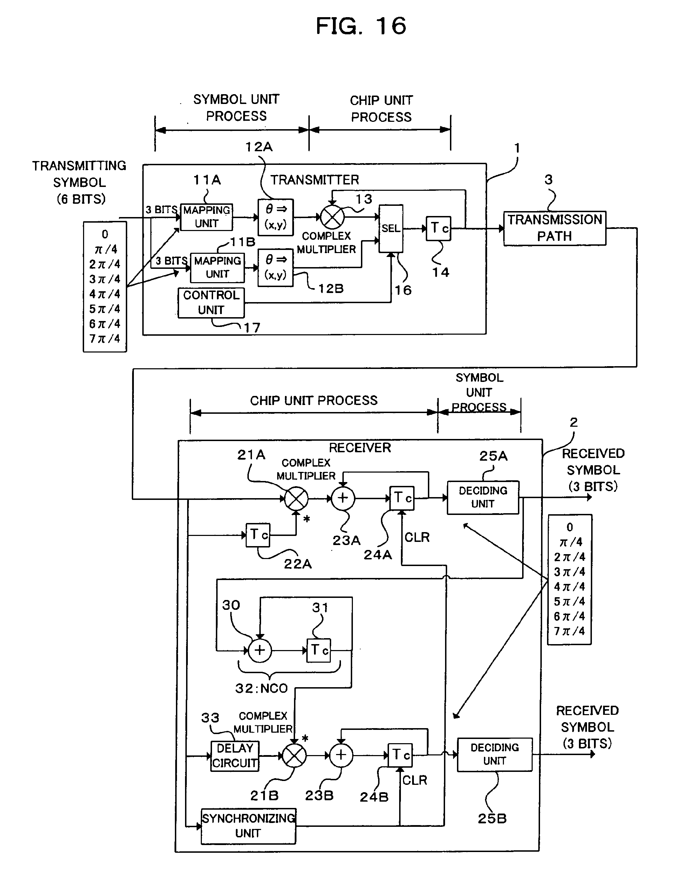

FIG. 16 is a block diagram showing a structure of a digital communication system according to a fourth embodiment of this invention. The system shown in FIG. 16 has a transmitter 1 and a receiver 2 receiving a signal transmitted through a wire or radio transmission path 3 from the transmitter 1. The transmitter 1 of this embodiment comprises mapping units 11A and 11B, orthogonal coordinates converting units 12A and 12B, a complex multiplier 13, a one-chip delay circuit 14, a selector 16 and a control unit 17 when attention is given to its essential parts. The receiver 2 comprises complex multipliers 21A and 21B, a one-chip delay circuit 22A, adders 23A and 23B, one-chip delay circuits 24A and 24B, deciding units 25A and 25B, a synchronizing unit 26, an NCO 32 (an adder 30 and a one-chip delay circuit 31) and a delay circuit 33, when attention is given to its essential parts.

In the transmitter 1, the mapping units 11A and 11B are similar to the mapping unit 11 described above with reference to FIG. 1. The mapping unit (first mapping unit) 11A assigns (maps) first transmitting symbol data (three bits) to a phase, the first transmitting symbol data being obtained when the inputted transmitting symbol data is divided into information pieces each of three bits. On the other hand, the mapping unit (second mapping unit) 11B assigns second transmission symbol data (three bits) to a phase, as well.

The orthogonal coordinates converting units 12A and 12B are similar to the one described above with reference to FIG. 1, each of which converts a phase amount of each symbol of the transmitting symbol data mapped to the phase to orthogonal coordinates.

The complex multiplier 13 functions together with the one-chip delay circuit 14 as a phase rotating processing unit in this embodiment, as well, which performs complex multiplication using an output from the orthogonal coordinates converting unit 12A and a result of complex multiplication obtained one chip unit time before (a feedback output from the one-chip delay circuit 14) to give a phase rotation to the transmission symbol data at each chip unit time, thereby generating a multi-valued (eight, here) PSK signal.

The selector 16 selectively outputs an output from the complex multiplier 13 or an output from the orthogonal coordinates converting unit 12B to the one-chip delay circuit 14 under control of the control unit 17. In this embodiment, the selector 16 is so controlled that the output from the orthogonal coordinates converting unit 12B is selected for one chip unit time at each head of the symbol, while the output from the complex multiplier 13 is selected for a period excepting this.

Namely, the transmitter 1 of this embodiment divides the transmission symbol data into the information pieces each of three bits. The first transmitting symbol data (three bits) is undergone the mapping process by the mapping unit 11A like the first embodiment, converted into orthogonal coordinates by the orthogonal coordinates converting unit 12A, and undergone the phase rotating process by the complex multiplier 13. The second transmitting symbol data (three bits) is undergone the mapping process by the mapping unit 11B, converted into orthogonal coordinates by the orthogonal coordinates converting unit 12B, and used as an initial value for the phase rotating process unit (the complex multiplier 13 and the one-chip delay circuit 14).

In other words, a block comprised of the complex multiplier 13, the one-chip delay circuit 14 and the selector 16 functions as a phase rotating process unit which gives a phase rotation to the first transmitting symbol data mapped to phase amounts by the first mapping unit 11A, the initial phase of the phase rotation being given by the output from the second mapping unit 11B, to generate a multi-valued (eight) PSK signal. Whereby, the transmitter 1 of this embodiment can transmit the transmitting symbol data using the phase difference at each chip unit time and the initial phase.

In the receiver 2, the complex multiplier 21A, the one-chip delay circuit 22A, the adder 23A, the one-chip delay circuit 24A and the deciding unit 25A are similar to the complex multiplier 21, the one-chip delay circuit 22, the adder 23, the one-chip delay circuit 24 and the deciding unit 25, respectively, described above with reference to FIG. 1. With respect to the first received symbol data, the complex multiplier 21A and the one-chip delay circuit 22A, which function together as a first inter-chip phase difference detecting unit, determine a phase difference at each chip unit time, the adder 23A and the one-chip delay circuit 24, which function together as a first averaging process unit, average phase differences for the symbol time, and the first deciding unit 25A identifies and demodulates the received symbol data which has been undergone the averaging process.

The adder 30, which is an element of the NCO 32, cumulatively adds the symbol data identified and demodulated by the deciding unit 25A and a result of addition performed one chip unit time before (a feedback output from the one-chip delay circuit 31). The one-chip delay circuit 31 delays the result of addition obtained by the adder 30 by only one chip unit time, and feeds back the result to the adder 30, while supplying the same to the complex multiplier 21B. Namely, the NCO (frequency signal generating unit) 32 generates a frequency signal according to data (identification result) identified and demodulated by the deciding unit 25A as a replica signal of the transmission signal given the phase rotation, and outputs it to the complex multiplier 21B to give a phase rotation (reverse-rotation) to the second received symbol data.

The delay circuit 33 delays the second received symbol data to synchronize the timing of multiplication of the symbol data to be undergone the phase rotating process using the replica signal by the replica signal, in the complex multiplier 21B. The complex multiplier (second inter-chip phase difference detecting unit) 21B multiplies the replica signal by the received symbol data delayed (timing-adjusted) by the delay circuit 33 to detect a phase difference between the both signals at each chip unit time.

The adder 23B and the one-chip delay circuit 24B function together as an averaging process unit (second averaging process unit) like the adder 23A and the one-chip delay circuit 24B. The adder 23B cumulatively adds the received symbol data undergone the phase rotating process by the complex multiplier 21B to the result of addition obtained one chip unit time before (a feedback output from the one-chip delay circuit 24B) for one symbol time. The one-chip delay circuit 24B delays the output from the adder 23b by only one chip unit time, and feeds it back to the adder 23B, while outputting it to the deciding unit 25. The phase differences at respective chip unit times are averaged for one symbol time by the adder 23B and the one-chip delay circuit 24B.

The one-chip delay circuits 24A and 24B in the respective averaging process units are initialized (data-cleared) at each symbol time according to the data clear signal fed from the synchronizing unit 26.

The deciding unit (second deciding unit) 25B identifies and demodulates the received symbol data undergone the averaging process. The synchronizing unit 26 detects the symbol timing from the received signal, generates the initializing (data-clearing) timing for each of the averaging process units (the one-chip delay circuits 24A and 24B), and supplies it to the same, like the first embodiment.

Next, description will be made of an operation of the digital communication system of this embodiment structured as above. In the transmitter 1, the transmitting symbol data is divided into information pieces each of three bits, the first transmitting symbol data is inputted to the mapping unit 11A, eight kinds of information bits are assigned to eight phases $(0, \pi/4, 2\pi/4, 3\pi/4, 4\pi/4, 5\pi/4, 6\pi/4, 7\pi/4)$, respectively, by the mapping unit 11A, and a phase amount of each symbol of the transmitting symbol data is converted into orthogonal coordinates by the orthogonal coordinates converting unit 12A.

The complex multiplier 13 and the one-chip delay circuit 14 perform cumulatively complex multiplication at each chip unit time to generate an 8PSK signal whose phase is rotated $\pi/4$ by $\pi/4$ from the initial phase $\theta_0$ at each chip unit time (time t1, t2, ..., t7).

With respect to the second transmitting symbol data, eight kinds of information bits thereof are assigned to eight phases $(0, \pi/4, 2\pi/4, 3\pi/4, 4\pi/4, 5\pi/4, 6\pi/4, 7\pi/4)$, respectively, by the mapping unit 11B like the first transmitting symbol data, and a phase amount of each symbol of the transmitting symbol data is converted into orthogonal coordinates by the orthogonal coordinates converting unit 12A, selected by the selector 16 to be used as the initial value $(\theta_0)$ for the phase rotating process unit (the one-chip delay circuit 14).

The 8PSK signal obtained as above is received by the receiver 2 through the transmission path 3 as a signal added noise thereto. The 8PSK signal is inputted to the complex multiplier 21A, the one-chip delay circuit 22A, the delay circuit 33 and the synchronizing unit 26. The symbol timing of the 8PSK signal is detected by the synchronizing unit 26 like the first embodiment. The phase of the first received symbol data of the signal is compared with a phase of a received signal received one chip unit time before by the complex multiplier 21A and the one-chip delay circuit 22A. The adding unit 23A and the one-chip delay circuit 24A perform the averaging process for a symbol time.

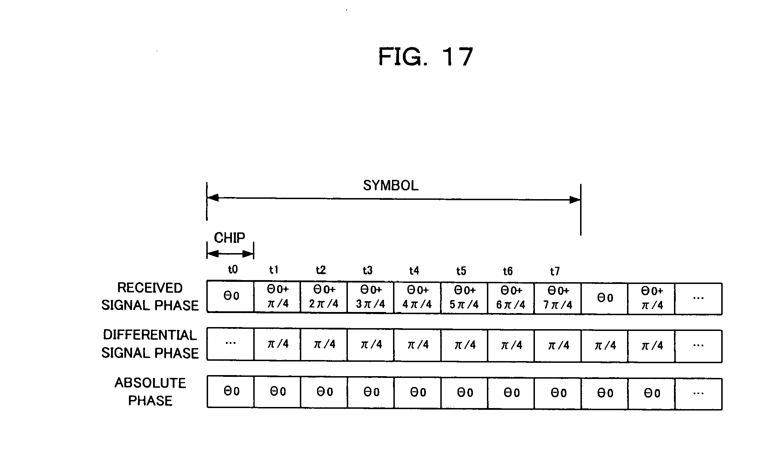

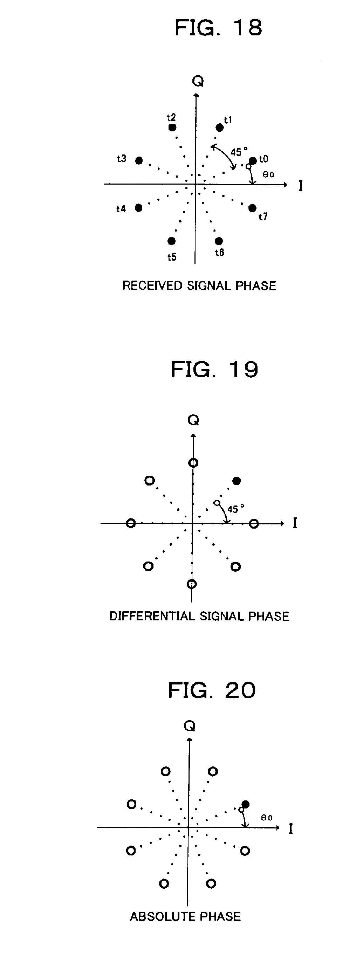

Assuming that the 8PSK signal having transmitting signal phases shown in FIG. 2 transmitted from the transmitter 1 is affected by noise in the transmission path 3 and received with received signal phases shown in the top column in FIG. 17 and in FIG. 18. The differential signal phase of the 8PSK signal at each chip unit time within one symbol time is $\pi/4$, as shown in the middle column in FIG. 17 and in FIG. 19.

The first received symbol data undergone the averaging process is inputted to the deciding unit 25A. The received symbol data (three bits) is identified and demodulated by the deciding unit 25A. Incidentally, the averaging process unit (the one-chip delay circuit 24A) is initialized at the each symbol timings detected by the synchronizing unit 26.

The received symbol data obtained by the deciding unit 25A is branched and inputted to the NCO 32, and cumulatively added to a result of addition performed one chip unit time before at each chip unit time by the NCO 32, whereby a replica signal of the transmission symbol data whose phase is rotated is generated and supplied to the complex multiplier 21B.

The complex multiplier 21B complex-multiplies the second received symbol data fed from the delay circuit 33 by the replica signal at each chip unit time to perform the phase rotating process (reverse-rotating process, $\pi/4$ by $\pi/4$) at each chip unit time. The initial phase (absolute phase) $\theta_0$ of the received signal can be detected through this process, as shown in the bottom column in FIG. 17 and in FIG. 20.

With respect to the obtained initial phase $\theta_0$ at each chip unit time, the averaging process for a symbol time is performed by the averaging process unit (the adder 23B and the one-chip delay circuit 24B), and the received symbol data (three bits) is identified and demodulated by the deciding unit 25B.

According to this embodiment, the transmitter 1 transmits transmitting symbol data (six bits), using a phase difference at each chip unit time and the initial phase $\theta_0$. The receiver 2 generates a replica signal of the transmission signal given the phase rotation on the basis of the first received symbol data (three bits) identified and demodulated, gives a phase reverse-rotation to the received symbol data by using the replica signal to determine the initial phase $\theta_0$, and identifies and demodulates the remaining (second) received symbol data (three bits). This embodiment can transmit information two times (six bits in the case of 8PSK) that of the forgoing embodiments with one symbol, which can increase the transmission capacity.

[E] Description of Synchronizing Unit 26 in Receiver 2

Next, description will be made in detail of the synchronizing unit 26 in the receiver 2 described above with reference to FIGS. 1, 9 and 16.

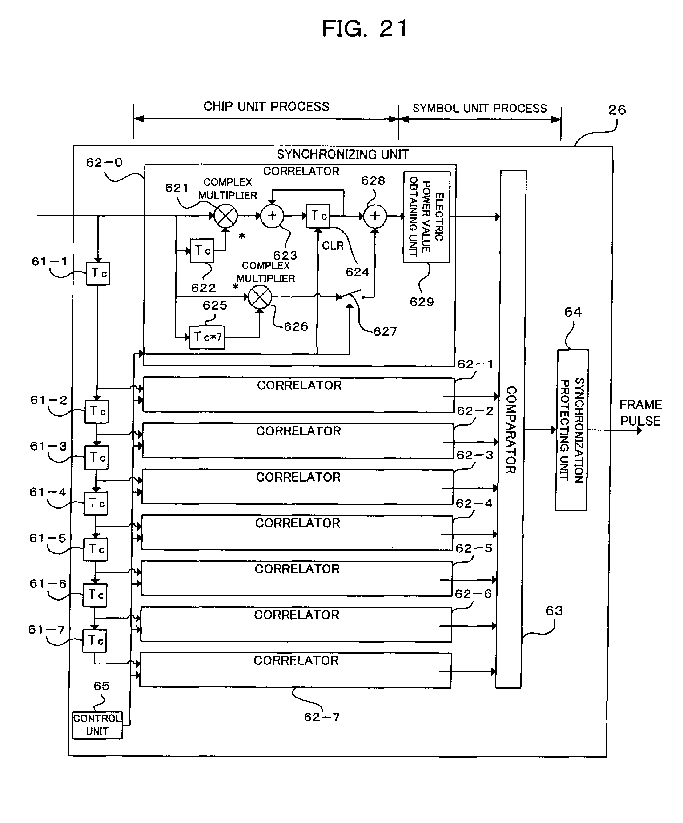

FIG. 21 is a block diagram showing a structure of the synchronizing unit 26. The synchronizing unit 26 shown in FIG. 21 detects a phase difference between a received signal from the transmitter 1 and a received signal received one chip unit time before at each chip unit time, and detects a timing at which the average value thereof is the greatest as a symbol timing that specifies the symbol time. In the case of 8PSK, the synchronizing unit 26 comprises seven one-chip delay circuits 61-1 through 61-7, eight correlators 62-0 through 62-7, a comparator 63, a synchronization protecting unit 64 and a control unit 65.

Each of the one-chip delay circuit 61-1 through 61-7 delays an input signal (received signal) by only one chip unit time. Whereby, seven signals each delayed by one chip unit time are obtained by the seven one-chip delay circuits 61-k (k = 1 to 7) and inputted to the correlators 62-1 through 62-7, respectively. Incidentally, the received signal from the transmission path 3 is inputted as it is to the correlator 62-0 without any delays.

Each of the correlators 62-m (m = 0 to 7) determines a phase difference at each chip unit time and a phase difference for seven chip unit times (a phase difference between the first chip and the last chip) from the input signal (received signal), and converts a signal undergone the averaging process to an electric power. For this purpose, the correlator 62-m has a similar structure to that of the receiver 2 described above with reference to FIG. 9. Namely, each of the correlators 62-m comprises, for example, a complex multiplier 621, a one-chip delay circuit 622, an adder 623, a one-chip delay circuit 624, a seven-chip delay circuit 625, a complex multiplier 626, a switch 627, an adder 628 and an electric power value obtaining unit 629.

The one-chip delay circuit 622, the adder 623, the one-chip delay circuit 624, the seven-chip delay circuit 625, the complex multiplier 626, the switch 627 and the adder 628 have identical functions as those of the complex multiplier 21, the one-chip delay circuit 22, the adder 23, the one-chip delay circuit 24, a plural-chip (seven chips, here) delay circuit 22a, the complex multiplier 21a, the switch 27 and the adder 29 shown in FIG. 9, respectively.

In each of the correlators 62-m, a block comprised of the complex multiplier 621, the one-chip delay circuit 622, the adder 623, the one-chip delay circuit 624, the complex multiplier 626, the seven-chip delay circuit 625, the switch 627 and the adder 628 (whose equivalent circuit is the same as the one shown in FIG. 11) adds an average value of the differential signal phases at respective chip unit times obtained in the similar manner to the first embodiment to a phase difference (an output from the complex multiplier 626) between the first (time t0) chip and the last (time t7) chip of the received signal, like the operation of the receiver 2 described above with reference to FIG. 9.

The electric power value obtaining unit 629 converts the output from the adder 628 to an electric power value. In this example, the data clear signal for the one-chip delay circuit 624 and the control signal for the switch 627 are supplied from the control unit 65 at each symbol timing, as well.

The comparator 64 compares electric power values from the correlators 62-m, and detects a timing of the maximum electric power value as the lead of the received symbol, that is, the symbol timing. The synchronization protecting circuit 64 protects the synchronization of the timing detected by the comparator 62, and generates a frame pulse (symbol timing). This frame pulse is used as the data clear signal and the switch turning signal.

In the synchronizing unit 26 structured as above, each of the one-chip delay circuits 61-k adds a delay to the received signal at each chip unit time, and outputs it to the corresponding correlator 62-m. In the correlator 62-m, the complex multiplier 621, the one-chip delay circuit 622, the adder 623 and the one-chip delay circuit 624 determine an average value of phase differences at respective chip unit times, while the complex multiplier 626 and the seven-chip delay circuit 625 determines a phase difference for seven chip unit times, and the adder 628 adds it to the average value of the phase differences at respective chip unit times.

A result of the addition is converted to an electric power value by the electric power value obtaining unit 629, and inputted to the comparator 63. The comparator 63 compares power values from the correlators 62-m, detects a timing at which the correlator output is the greatest. The synchronization protecting unit 64 protects the synchronization of the detection result, whereby a frame pulse is generated and outputted.

As above, it is possible to accurately detect the symbol timing of a signal undergone the phase rotating process at each chip unit time within one symbol in the transmitter 1, and allow the averaging process to be performed accurately on the differential signal phases for a symbol time in the receiver 2.

[F] Description of Fifth Embodiment

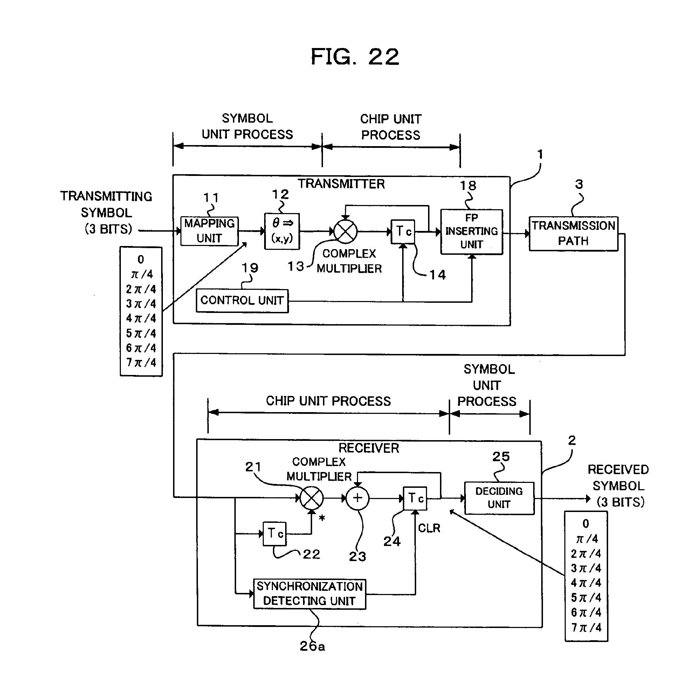

FIG. 22 is a block diagram showing a structure of a digital communication system according to a fifth embodiment of this invention. The system shown in FIG. 22 has a transmitter 1 and the receiver 2 receiving a signal transmitted through a wire or radio transmission path 3 from the transmitter 1. The transmitter 1 of this embodiment comprises a frame pattern (FP) inserting unit 18 and a control unit 19, along with the mapping unit 11, the orthogonal coordinates converting unit 12, the complex multiplier 13 and the one-chip delay circuit 14 which function together as the phase rotating unit, described above with reference to in FIG. 1 when attention is given to its essential parts. The receiver 2 comprises a synchronizing unit 26a in place of the synchronizing unit 26, along with the complex multiplier 21, the one-chip delay circuit 22, the adder 23 and the one-chip delay circuit 24 which function together as the averaging process unit, and the deciding unit 25.

The control unit 19 newly added to the receiver 1 generates a timing signal for inserting a frame pattern in a predetermined cycle. This timing signal is supplied as an FP insert timing signal for the FP inserting unit 18 and a data clear signal for the phase rotating process unit (the one-chip delay circuit 14).

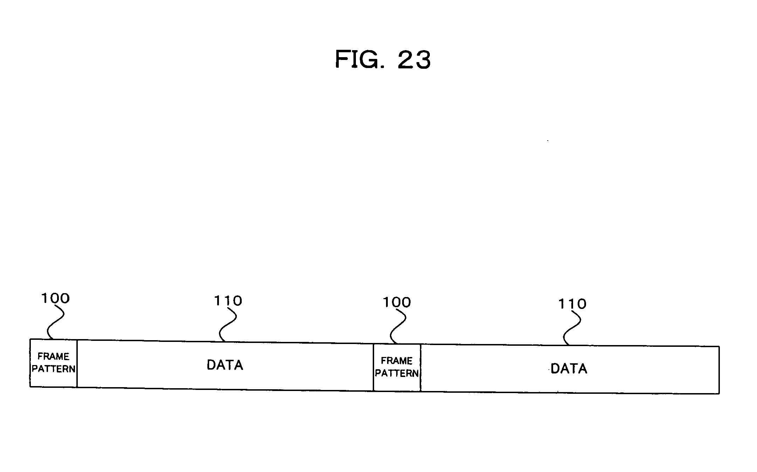

The FP inserting unit 18 inserts a predetermined frame pattern (frame synchronization pattern) to an output from the phase rotating process unit (the complex multiplier 13 and the one-chip delay circuit 14) according to the FP insert timing signal (that is, transmitting frame cycle) fed from the control unit 19 to form a transmitting frame having a frame pattern 100 at the head of a data portion 110, as shown in FIG. 23, for example.

In the receiver 2, the synchronization detecting unit 26a detects the frame pattern 100 from a signal received through the transmission path 3. The averaging process by the averaging unit (the one-chip delay circuit 24) is initialized (data-cleared) at a timing of detection of the frame pattern 100.

In the system of this embodiment structured as above, it is possible to establish the frame synchronization without using the special synchronizing unit 26 described above with reference to FIG. 21, and accurately perform the averaging process on the differential signal phases in the receiver 2.

Meanwhile, the phase rotating process in the transmitter 1 may be performed by the use of the NCO, as described above with reference to FIG. 15.

When the FP inserting unit 18 and the control unit 19 are applied to the transmitter 1, it becomes possible to establish the frame synchronization and accurately perform the averaging process on the differential signal phases, by applying the synchronization detecting unit 26a in place of the synchronizing unit 26.

According to an embodiment of this invention, the phase rotating process is performed on the transmitting symbol data at each chip unit time to generate a multi-valued phase modulation signal, and the signal is transmitted. The receiver compares the phase of the received signal with the phase of a signal received one chip unit time before, and adds (averages) results of the phase comparing process to cancel noise in the phase direction. It is thereby possible to decrease noise in the phase direction and improve the symbol error rate in the phase modulation system. Embodiments of this invention are thus very useful in the field of digital communication techniques.

This application is based on and hereby claims priority to Japanese Application No. 2005-334793 filed on November 18, 2005 in Japan, the contents of which are hereby incorporated by reference.

**Claims**

1. A communication system having a transmitter (1) and a receiver (2) comprising:

   said transmitter (1) comprising:

a mapping unit (11) for mapping transmitting symbol data to a plurality of phase amounts;
a phase rotating process unit (12, 13, 14) for giving a phase rotation to the transmitting symbol data mapped to the phase amounts by said mapping unit (11) at each chip unit time to generate a polyphase modulated signal;

said receiver (2) comprising:

an inter-chip phase difference detecting unit (21, 22) for detecting a phase difference between a received signal received from said transmitter (1) and a received signal received one chip unit time before at each chip unit time;
an averaging process unit (23, 24) for averaging phase differences at respective chip unit times detected by said inter-chip phase difference detecting unit (21, 22) for one symbol time; and
an deciding unit (25) for deciding an output from said averaging process unit (23, 24) and demodulating the polyphase modulated signal.

2. A communication system having a transmitter (1) and a receiver (2) comprising:

said transmitter (1) comprising:

a first mapping unit (11A) for mapping first transmitting symbol data to a plurality of phase amounts;
a second mapping unit (11B) for mapping second transmitting symbol data to a plurality of phase amounts;
a phase rotating process unit (12A, 12B, 13, 14, 16) for giving a phase rotation from an initial phase to the first transmitting symbol data mapped to the phase amounts by said first mapping unit (11A) at each chip unit time, said initial phase being given by an output from said second mapping unit (11B), to generate a polyphase modulated signal;

said receiver (2) comprising:

a first inter-chip phase difference detecting unit (21A, 22A) for detecting a phase difference between a received signal received from said transmitter (1) and a received signal received one chip unit time before at each chip unit time;
a first averaging process unit (23A, 24A) for averaging phase differences at respective chip unit times detected by said first inter-chip phase difference detecting unit (21A, 22A) for one symbol time;
a first deciding unit (25A) for deciding an output from said first averaging process unit (23A, 24A);
a frequency signal generating unit (32) for generating a frequency signal according to a result of identification performed by said first deciding unit (25A);
a second inter-chip phase difference detecting unit (21B) for detecting a phase difference between the frequency signal and the received signal at each chip unit time;
a second averaging process unit (23B, 24B) for averaging phase differences at respective chip unit times detected by said second inter-chip phase difference detecting unit (21B) for one symbol time; and
a second deciding unit (25B) for deciding an output from said second averaging process unit (23B, 24B).

3. A communication method in a communication system having a transmitter (1) and a receiver (2) comprising the steps of:

in said transmitter (1),

mapping transmitting symbol data to a plurality of phase amounts;
giving a phase rotation to the mapped transmitting symbol data at each chip unit time to generate a polyphase modulated signal, and transmitting the same;

in said receiver (2),

detecting a phase difference between a received signal received from said transmitter (1) and a received signal received one chip unit time before at each chip unit time;
averaging phase differences detected at respective chip unit times for one symbol time; and
deciding an averaged output and demodulating the polyphase modulated signal.

**4.** The communication method according to claim 3, wherein said receiver (2) detects a phase difference between the first received signal and the last received signal within one symbol, and adds the phase difference to the averaged phase difference.

**5.** A communication method in a communication system having a transmitter (1) and a receiver (2) comprising the steps of:

in said receiver (1),

mapping each of first and second transmitting symbol data to a plurality of phase amounts;
giving a phase rotation from an initial phase to the mapped first transmitting symbol data at each chip unit time, said initial phase being given by the mapped second symbol data, to generate a polyphase modulated signal, and transmitting the same;

in said receiver (2),

detecting a phase difference between a received signal received from said transmitter (1) and a received signal received one chip unit time before at each chip unit time;
averaging phase differences detected at respective chip unit times for one symbol time;
deciding an averaged output;
generating a frequency signal according to a result of the identification;
detecting a phase difference between the frequency signal and the received signal at each chip unit time;
averaging phase differences detected at respective chip unit times for one symbol time; and
deciding an averaged output.

**6.** The communication method according to any one of claims 3 to 5, wherein said transmitter (1) transmits the polyphase modulated signal in a predetermined transmitting frame having a frame synchronization pattern, while said receiver (2) detects the frame synchronizing pattern from the received signal to establish synchronization of the averaging.

**7.** A transmitter (1) used in a communication system having a receiver (2) comprising:

a mapping unit (11) for mapping transmitting symbol data to a plurality of phase amounts; and
a phase rotating process unit (12, 13, 14) for giving a phase rotation to the transmitting symbol data mapped to the phase amounts by said mapping unit (11) to generate a polyphase modulated signal.

**8.** The transmitter according to claim 7, wherein said phase rotating process unit (12, 13, 14) comprises:

an orthogonal coordinates converting unit (12) for converting an output from said mapping unit to orthogonal coordinates; and
a complex multiplier (13) for performing the phase rotation by performing complex multiplication using an output from said orthogonal coordinates converting unit (12) and a result of complex multiplication performed one chip unit time before.

**9.** The transmitter according to claim 7, wherein said phase rotating process unit (12, 13, 14) performs the phase rotation with a numerically controlled oscillator (15).

**10.** A receiver (2) used in a communication system having a transmitter (1) comprising:

an inter-chip phase difference detecting unit (21, 22) for detecting a phase difference between a received signal received from said transmitter (1) and a received signal received one chip unit time before at each chip unit time;
an averaging process unit (23, 24) for averaging phase differences at respective chip unit times detected by said inter-chip phase difference detecting unit (21, 22) for one symbol time; and
an deciding unit (25) for deciding an output from said averaging process unit (23, 24) and demodulating a multi-value phase modulated signal.

**11.** The receiver according to claim 10 further comprising:

a symbol-end phase difference detecting unit (21a, 22a) for detecting a phase difference between the first received signal and the last received signal within one symbol; and
an adder (29) for adding the phase difference detected by said symbol-end phase difference detecting unit (21a, 22a) to a phase difference averaged by said averaging process unit (23,24).

**12.** A transmitter (1) used in a communication system having a receiver (2) comprising:

a first mapping unit (11A) for mapping first transmitting symbol data to a plurality of phase amounts;
a second mapping unit (11B) for mapping second transmitting symbol data to a plurality of phase amounts; and
a phase rotating process unit (12A, 12B, 13, 14, 16) for giving a phase rotation from an initial phase to the first transmitting symbol data mapped to the phase amounts by said first mapping unit (11A) at each chip unit time, said initial phase being given by an output from said second mapping unit (11B), to generate a polyphase modulated signal.

**13.** A receiver (2) used in a communication system having a transmitter (1) comprising:

a first inter-chip phase difference detecting unit (21A, 22A) for detecting a phase difference between a received signal received from said transmitter (1) and a received signal received one chip unit time before at each chip unit time;
a first averaging process unit (23A, 24A) for averaging phase differences at respective chip unit times detected by said first inter-chip phase difference detecting unit (21A, 22A) for one symbol time;
a first deciding unit (25A) for deciding an output from said first averaging process unit (23A, 24A);
a frequency signal generating unit (32) for generating a frequency signal according to a result of identification performed by said first deciding unit (25A);
a second inter-chip phase difference detecting unit (21B) for detecting a phase difference between the frequency signal and the received signal at each chip unit time;
a second averaging process unit (23B, 24B) for averaging phase differences at respective chip unit times detected by said second inter-chip phase difference detecting unit (21B) for one symbol time; and
a second deciding unit (25B) for deciding an output from said second averaging process unit (23B, 24B).

**14.** The receiver according to claim 13 further comprising:

a symbol-end phase difference detecting unit (21a, 22a) for detecting a phase difference between the first received signal and the last received signal within one symbol; and
an adder (29) for adding a phase difference detected by said symbol-end phase difference detecting unit (21a, 22a) to a phase difference averaged by said first averaging process unit (23, 24).

**15.** The receiver according to claim 10 or 13 further comprising:

a synchronizing unit (26) for detecting a phase difference between a received signal received from said transmitter (1) and a received signal received one chip unit time before at each chip unit time, and detecting a timing at which an average value of the phase differences is the greatest as a symbol timing for specifying the symbol time.

# FIG. 1

SYMBOL UNIT PROCESS — CHIP UNIT PROCESS

TRANSMITTER

1

3

TRANSMITTING
SYMBOL
(3 BITS)

11
MAPPING
UNIT

12
$\theta \Rightarrow$
$(x,y)$

13 — COMPLEX
MULTIPLIER

Tc

14

TRANSMISSION
PATH

0
$\pi/4$
$2\pi/4$
$3\pi/4$
$4\pi/4$
$5\pi/4$
$6\pi/4$
$7\pi/4$

CHIP UNIT PROCESS — SYMBOL UNIT PROCESS

RECEIVER

2

COMPLEX
MULTIPLIER

25
DECIDING
UNIT

RECEIVED
SYMBOL
(3 BITS)

22

Tc

21

+

23

Tc

CLR

24

26
SYNCHRONIZING
UNIT

0
$\pi/4$
$2\pi/4$
$3\pi/4$
$4\pi/4$
$5\pi/4$
$6\pi/4$
$7\pi/4$

EP 1 788 766 A2

# FIG. 2

EP 1 788 766 A2

SYMBOL

CHIP

| | t0 | t1 | t2 | t3 | t4 | t5 | t6 | t7 | | | |
|---|---|---|---|---|---|---|---|---|---|---|---|
| TRANSMITTING SIGNAL PHASE | $\theta 0$ | $\theta 0+ \pi/4$ | $\theta 0+ 2\pi/4$ | $\theta 0+ 3\pi/4$ | $\theta 0+ 4\pi/4$ | $\theta 0+ 5\pi/4$ | $\theta 0+ 6\pi/4$ | $\theta 0+ 7\pi/4$ | $\theta 0$ | $\theta 0+ \pi/4$ | ... |

# FIG. 3

TRANSMITTING SIGNAL PHASE
($\theta$0=0)

FIG. 4

FIG. 5

# FIG. 6

RECEIVED SIGNAL PHASE
($\theta 0=0$)

# FIG. 7

DIFFERENTIAL SIGNAL PHASE

# FIG. 8

EP 1 788 766 A2

# FIG. 9

CHIP UNIT PROCESS | SYMBOL UNIT PROCESS

RECEIVER

RECEIVED SYMBOL (3 BITS)

21 COMPLEX MULTIPLIER

22 Tc

23

24 CLR

Tc

29

25 DECIDING UNIT

27

21a COMPLEX MULTIPLIER

22a Tc*7

26 SYNCHRONIZING UNIT

28 CONTROL UNIT

$0$
$\pi/4$
$2\pi/4$
$3\pi/4$
$4\pi/4$
$5\pi/4$
$6\pi/4$
$7\pi/4$

# FIG. 10

SYMBOL

CHIP

| | t0 | t1 | t2 | t3 | t4 | t5 | t6 | t7 | | | |
|---|---|---|---|---|---|---|---|---|---|---|---|
| RECEIVED SIGNAL PHASE | $\theta 0$ | $\theta 0+ \pi/4$ | $\theta 0+ 2\pi/4$ | $\theta 0+ 3\pi/4$ | $\theta 0+ 4\pi/4$ | $\theta 0+ 5\pi/4$ | $\theta 0+ 6\pi/4$ | $\theta 0+ 7\pi/4$ | $\theta 0$ | $\theta 0+ \pi/4$ | ... |
| DIFFERENTIAL SIGNAL PHASE | ... | $\pi/4$ | $\pi/4$ | $\pi/4$ | $\pi/4$ | $\pi/4$ | $\pi/4$ | $\pi/4$ | $\pi/4$ | $\pi/4$ | ... |

EP 1 788 766 A2

# FIG. 11

EP 1 788 766 A2

# FIG. 12

RECEIVED SIGNAL PHASE
($\theta$ 0=0)

# FIG. 13

DIFFERENTIAL SIGNAL PHASE

FIG. 14

# FIG. 15

EP 1 788 766 A2

# FIG. 16

FIG. 17

FIG. 18

RECEIVED SIGNAL PHASE

FIG. 19

DIFFERENTIAL SIGNAL PHASE

FIG. 20

ABSOLUTE PHASE

# FIG. 21

# FIG. 22

SYMBOL UNIT PROCESS — CHIP UNIT PROCESS

TRANSMITTER 1

TRANSMITTING SYMBOL (3 BITS) → MAPPING UNIT 11 → $\theta \Rightarrow (x,y)$ 12 → ⊗ COMPLEX MULTIPLIER 13 → $T_c$ 14 → FP INSERTING UNIT 18 → TRANSMISSION PATH 3

0
$\pi/4$
$2\pi/4$
$3\pi/4$
$4\pi/4$
$5\pi/4$
$6\pi/4$
$7\pi/4$

CONTROL UNIT 19

CHIP UNIT PROCESS — SYMBOL UNIT PROCESS

RECEIVER 2

COMPLEX MULTIPLIER 21 → ⊗ → (+) 23 → $T_c$ 24 CLR → DECIDING UNIT 25 → RECEIVED SYMBOL (3 BITS)

$T_c$ 22 *

SYNCHRONIZATION DETECTING UNIT

26a

0
$\pi/4$
$2\pi/4$
$3\pi/4$
$4\pi/4$
$5\pi/4$
$6\pi/4$
$7\pi/4$

EP 1 788 766 A2

## FIG. 23

| 100 | 110 | 100 | 110 |
|---|---|---|---|
| FRAME PATTERN | DATA | FRAME PATTERN | DATA |

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2277332 A
- JP 2003264520 A
- WO 995928 A
- JP 2005334793 A